# EUROPÄISCHE PATENTSCHRIFT

(11) **EP 0 908 602 B1**
(45) Veröffentlichungstag und Bekanntmachung des Hinweises auf die Patenterteilung: **12.03.2003**
(21) Anmeldenummer: 97810738.1
(22) Anmeldetag: 06.10.1997
(51) Int. Cl.: F01K 23/10

(54) **Verfahren zum Betrieb einer Kombianlage**
Method of operating a combined power plant
Procédé de conduite d'une centrale à cycle combinée

(43) Veröffentlichungstag der Anmeldung: 14.04.1999
(73) Patentinhaber: ALSTOM (Switzerland) Ltd, 5401 Baden (CH)
(72) Erfinder: Bachmann, Rolf, 5312 Döttingen (CH); Häusermann, Alfred, 5412 Gebenstorf (CH); Müller, Peter, 8115 Hüttikon (CH); Weiss, Gerhard, 5442 Oberrohrdorf (CH)

(56) Entgegenhaltungen:
- EP-A- 0 379 930
- EP-A- 0 709 561
- US-A- 3 879 616

## Beschreibung

### Technisches Gebiet

Die vorliegende Erfindung betrifft ein Verfahren zum Betrieb einer Kombianlage, im wesentlichen bestehend aus einer Gasturbine, mindestens einem Generator und einem Dampfkreislauf, wobei dieser Dampfkreislauf im wesentlichen aus einem Abhitzedampferzeuger, aus mindestens einer Niederdruck- und/oder Mitteldruck-Dampfturbine und einer Hochdruck-Dampfturbine besteht.

### Stand der Technik

Aus EP-0 379 930 B1 ist eine Kombianlage bekanntgeworden, welche durch eine Einwellenanordnung charakterisiert ist. Gasturbine und Dampfturbine sind hier starr miteinander gekoppelt. Der zum Dampfkreislauf dieser Kombianlage gehörende Abhitzedampferzeuger wird als Zweidruckkessel betrieben.
Das Problem bei einer solchen Anordnung besteht darin, dass bei Lastabwurf verhindert werden muss, dass die Gasturbine auf Ueberdrehzahl geht und dass sie darauf abgeschaltet werden muss. Sie müsste vielmehr auf Inselbetrieb (= Eigenbedarfsbetrieb) gehen, bis diese mit dem Netz wieder synchronisiert werden kann. Dies ist jedoch insofern schwierig zu bewerkstelligen, weil einerseits der Dampfzufluss zur Dampfturbine unterbrochen werden muss, ansonst das Antriebsmoment zu gross wird und die Anlage dadurch auf Ueberdrehzahl geht; andererseits muss ein minimaler Dampfstrom als Kühldampf durch die Dampfturbine aufrechterhalten werden, um eine Aufheizung der mit der Gasturbine festgekoppelten Dampfturbine zu verhindern.
Dementsprechend wird hier vorgesehen, die Kühlung der Dampfturbine mit einer in einem Hilfsaggregat bereitgestellten Dampfmenge aufrechtzuerhalten, oder die Dampfturbinenventile nicht ganz zu schliessen. Damit wird aber im Grunde genommen der Durchfluss durch die Dampfturbine nur reduziert, so dass der sich daraus ergebende Drehmoment, der anlagetechnisch zu Schwierigkeiten führt, durch andere komplizierte regelungstechnische Eingriffe abgefangen werden muss.

### Darstellung der Erfindung

Hier will die Erfindung Abhilfe schaffen. Der Erfindung liegt die Aufgabe zugrunde, ein Verfahren zum Betrieb einer Kombianlage gemäss dem Oberbegriff des Anspruchs 1 derart weiterzubilden, dass schaltungstechnische Massnahmen getroffen werden sollen, welche sicherstellen, dass bei einem Lastabwurf der Anlage die Strömungsmaschinen sicher geschützt werden.

Die Lösung der der Erfindung zugrundeliegende Aufgabe ist im Anspruch 1 angegeben. Den Erfindungsgedanken vorteilhaft weiterbildende Merkmale sind Gegenstand der abhängigen Ansprüche.

Erfindungsgemäß wird einVerfahren zum Betrieb einer Kombianlage, im wesentlichen bestehend aus einer Gasturbine, mindestens einem Generator und einem Dampfkreislauf, wobei dieser Dampfkreislauf im wesentlichen aus einem Abhitzedampferzeuger, aus mindestens einer Niederdruckund/oder Mitteldruck-Dampfturbine und einer Hochdruck-Dampfturbine besteht,
- wobei sich zwischen der Hochdruck-Dampfturbine und der Niederdruck- und/oder Mitteldruck-Dampfturbine ein zum Abhitzedampferzeuger gehöriger Zwischenüberhitzer mit einem bestimmten Volumen befindet,
- wobei die Gasturbine, der Generator und die Dampfturbine auf einer Welle angeordnet sind,
- wobei der Generator zwischen der Gasturbine und der Dampfturbine anordnet ist und sich zwischen dem Generator und der Dampfturbine eine Kupplung befindet,
- wobei im Normalbetrieb die Gasturbine und die Dampfturbine durch die Kupplung miteinander gekoppelt sind, derart weitergebildet, dass
- bei einem Lastabwurf mindestens ein stromauf der Hochdruck-Dampfturbine wirkendes Ventil geschlossen wird,
- dass die Gasturbine und der Generator von der Niederdruck- und/oder Mitteldruck-Dampfturbine durch die Kupplung entkoppelt werden, so dass Gasturbine und Generator auf Inselbetrieb gehen,
- dass durch die Optimierung des Volumens des Zwischenüberhitzers die Drehzahl der entkoppelten Dampfturbine nicht grösser ist als die der Gasturbine und des Generators,
- dass ein Dampf im Strömungspfad eines zum Abhitzedampferzeuger gehörenden Zwischenüberhitzers frei durch die Niederdruck- und/oder Mitteldruck-Dampfturbine expandiert, und
- dass durch die Entkopplung von Gas- und Dampfturbine diese Expansion nicht zu einer Drehzahl der Gasturbine und des Generators über deren Schutzdrehzahl führt.

Bei Lastabwurf werden zunächst die Ventile vor der Hochdruck-Dampfturbine ganz geschlossen; gleichzeitig sind hier Mittel vorgesehen, welche dafür sorgen, dass die Gasturbine von der Dampfturbine zur Entkoppelung kommt. Da Generator und Gasturbine miteinander diesseits einer entsprechend ausgelegten Kupplung eingebunden sind, lassen sich die beiden ohne eine von der Dampfturbine ausgehende lastmässige Interferenz mit einer optimierten Drehzahl auf Inselbetrieb fahren. Bei diesem Vorgang nimmt die Drehzahl der entkoppelten Dampfturbine ab, sie bleibt unterhalb der 100%igen Drehzahl der Gasturbine und Generator, die als unabhängige Maschine betreibbar sind.
Der Dampf im Strömungspfad des Zwischenüberhitzers kann sodann frei durch die Niederdruck- und/oder Mitteldruck-Dampfturbine expandieren, wobei die Drehzahl der Gasturbine samt Generator auch durch die letztgenannte Expansion nicht über deren Schutzdrehzahl ansteigt.

Die wesentlichen Vorteile der Erfindung sind damit offensichtlich, denn auf der einen Seite kann eine Entkoppelung zwischen Gasturbine und Generator einerseits und Dampfturbine andererseits erfolgen. Der Dampf im Strömungspfad des Zwischenüberhitzers kann nach der entsprechenden Abkoppelung frei zur entsprechenden Dampfturbine expandieren, womit diese durch weitere Hilfsmassnahmen, beispielsweise durch regelungstechnische Vorkehrungen, nicht weiter abgesichert werden muss. Darüber hinaus muss hier auch keine Dampfmenge aus einem Hilfsaggregat zu Kühlzwecken dieser Dampfturbine bereitgestellt werden.

Vorteilhafte und zweckmässige Weiterbildungen der erfindungsgemässen Aufgabenlösung sind in den weiteren Ansprüchen gekennzeichnet.

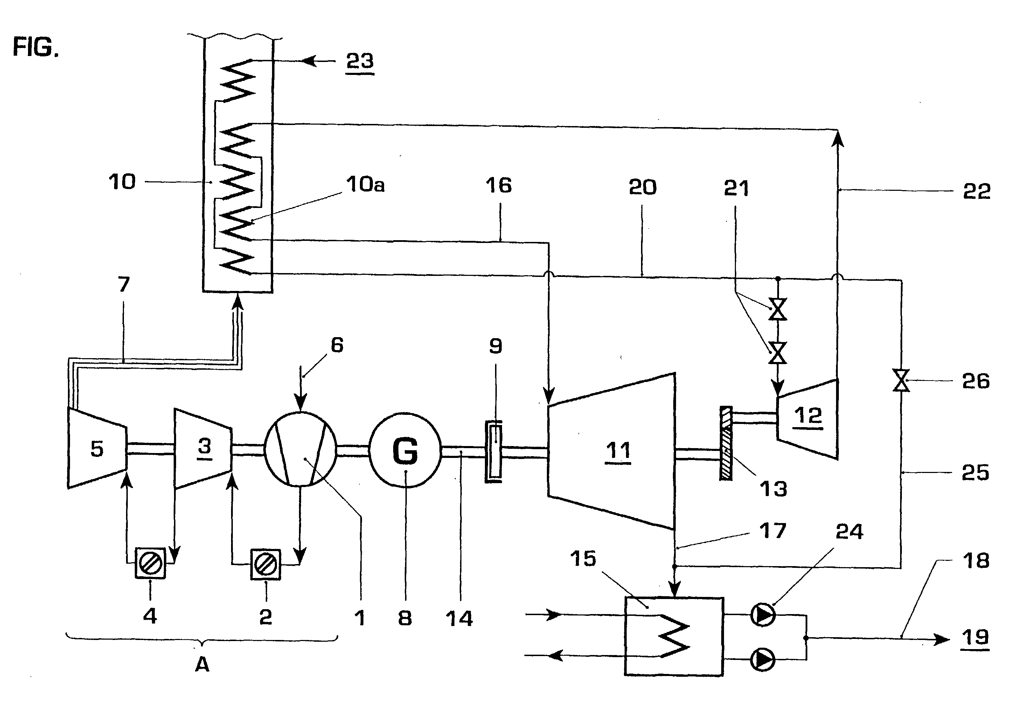

Im folgenden wird anhand der Zeichnung ein Ausführungsbeispiel der Erfindung näher erläutert. Alle für das unmittelbare Verständnis der Erfindung nicht erforderlichen Merkmale sind fortgelassen worden. Die Strömungsrichtung der Medien ist mit Pfeilen angegeben.

### Kurze Beschreibung der Zeichnung

Die einzige Figur zeigt eine Schaltung einer Kombianlage, bei welcher bei Lastabwurf eine Entkoppelung von Gastubine und Generator von den übrigen Strömungsmaschinen erfolgt, und die entkoppelte Dampfturbine, hier die Mitteldruck/Niederdruck-Dampfturbine nicht weiter abgesichert werden muss.

### Weg zur Ausführung der Erfindung

In der Figur wird eine Kombianlage gezeigt, bei welcher unter A eine sequentiell befeuerte Gasturbine A dargestellt ist, welche im wesentlichen aus einer Verdichtereinheit 1, einer ersten Brennkammer 2, einer ersten Turbine 3, einer zweiten Brennkammer 4 und einer zweiten Turbine 5 besteht. Für die nähere Betriebsweise einer solchen Gasturbine wird auf die Beschreibung in EP-A1-0 620 362 verwiesen. Grundsätzlich kann die Gasturbine auch aus einer einzelnen Befeuerung bestehen. Die Gasturbine A steht wellenstrangmässig in direkter Wirkverbindung mit einen Generator 8. Intermediär zwischen Generator 8 und einer ersten Dampfturbine 11, die hier eine Mitteldruck/Niederdruck-Dampfturbine ist, wirkt eine Kupplung 9, welche bedarfsweise die Entkopplung der Gasturbogruppe, also der Gasturbine A samt Generator 8, von der Dampfturbine 11 ermöglicht. Die Abgasen 7 aus der letzten Turbine 5 der Gasturbogruppe durchströmen einen Abhitzedampferzeuger 10, welcher in Wirkverbindung mit einem Dampfkreislauf steht. Bei einem solchen Dampfkreislauf geht es primär darum, im Zusammenwirken mit dem kalorischen Restpotential der Abgase 7 hochwertige Dampfmengen zu erzeugen, welche den Betrieb mindestens einer Dampfturbine sicherstellen. Typische Dampfkreisläufe im Zusammenhang mit dem Betrieb einer Gas/Dampf-Kombianlage gehen aus der Druckschrift EP-A1-0 674 099 hervor.

Summarisch sei der hier aufgezeigte Dampfkreislauf kurz beschrieben. Die Abgase 7 durchströmen, wie bereits erwähnt, den hier nur teilweise gezeigten Abhitzedampferzeuger 10 und werden dann als Rauchgase abgeleitet. Der hier gezeigte Abhitzedampferzeuger 10 stellt eine Ausführungsvariante dar, bei der zwei qualitativ verschiedene Dampfmengen bereitgestellt werden können. Nicht ersichtlich ist hier beispielsweise der Betrieb eines zum Abhitzedampferzeuger üblichen Economizers mit zugehörigen Trommeln. Beispielsweise aus einer Economizerstufe oder Dampftrommel strömt das durch Pfeil 23 versinnbildlichte Heisswasser in den Abhitzedampferzeuger 10, in welchem es über mehrere wärmetauschende Strecken zu überhitztem Dampf 20 aufbereitet wird. Dieser überhitzte Dampf 20 beaufschlagt dann eine Hochdruck-Dampfturbine 12, wobei stromauf derselben eine Reihe von Ventilen 21 vorgesehen sind. Nach der Expansion in dieser Turbine 12 strömt der Dampf 22 zurück in den Abhitzedampferzeuger 10, in welchem er über einen separaten Strömungspfad einer neuerlichen kalorischen Aufbereitung unterzogen wird. Daraus entsteht eine überhitzte Dampfmenge 16, welche anschliessend die Mitteldruck/Niederdruck-Dampfturbine 11 beaufschlagt. Die beiden druckmässig unterschiedlichen Stufen der Dampfturbine 11 können auch voneinander getrennt sein, oder es kann wechselweise nur eine der beiden Stufen vorhanden sein. Nach dieser Expansion wird der entspannte Dampf 17 durch einen wasser- oder luftgekühlten Kondensator 15 geleitet. Das Kondensat 18 daraus wird über eine Reihe von Förderpumpen 24 vorzugsweise in einen hier nicht gezeigten Speisewasserbehälter und Entgaser 19 geleitet und von hier aus erneut in den Abhitzedampferzeuger 10 zurückgeführt, wobei auf die mögliche Zuschaltung von Ausdampfkaskaden in Wirkverbindung mit einer oder mehreren dampferzeugenden Strängen hier nicht näher eingegangen wird. Die Hochdruck-Dampfturbine 12 ist über ein Getriebe 13 mit der Hauptrotorwelle 14, vorzugsweise mit Mitteldruck/Niederdruck-Dampfturbine 11 verbunden.

Die Funktionsweise der Schaltung ist die folgende: Bei einem Lastabwurf der Anlage werden die stromauf der Hochdruck-Dampfturbine 12 wirkenden Ventile 21 ganz geschlossen. Darauf tritt eine intermediär zwischen Generator 8 und Turbine 11, hier die Mitteldruck/Niederdruck-Dampfturbine, angeordnete Kupplung 9 in Aktion, dergestalt, dass eine Entkopplung der Gasturbogruppe, also der Gasturbine A und des Generators 8, gegenüber den Dampfturbinen 11, 12 erstellt wird. Bei dieser Entkopplung ist es so, dass eine gasturbinenseitige Hauptwelle in Wirkverbindung mit den Strömungsmaschinen der Gasturbine A samt Generator 8 steht. Somit ist es möglich, diese Gasturbogruppe A+8 auf Inselbetrieb zu fahren, ohne damit die abgekoppelte Dampfturbine 11 zu involvieren. An sich stellt sich innerhalb der Dampfturbinengruppe eine Drehzahl ein, die abnimmt und nie grösser als die Drehzahl der im Inselbetrieb fahrenden Gasturbogruppe wird. Die Gasturbogruppe A + 8 weist auch eine Drehzahl auf, die selbst durch die Entkopplung nicht über deren Schutzdrehzahl steigen kann. Auf der anderen Seite kann der Dampf im Strömungspfad eines zum Abhitzedampferzeuger 10 gehörenden Zwischenüberhitzers 10a frei durch die Mitteldruck/Niederdruck-Dampfturbine 11 expandieren, womit weitere Absicherungen dieser Dampfturbine 11 dahinfallen können. Dabei ist der Zwischenüberhitzer 10a bzw. dessen Dampfstrang so optimiert, dass das gespeicherte Volumen bei einem Lastabwurf nicht zu einer Ueberdrehzahl führt; eine Absicherung dieser Dampfturbine 11 mittels Abfangventile ist bei einer solchen Auslegung grundsätzlich nicht vonnöten. Die Kupplung 9 ist vorzugsweise eine selbstsynchronisierende Kupplung, welche den Vorgang zum Einkuppeln selbsttätig einleitet, sobald die Drehzahl der Dampfturbine grösser wird als die Drehzahl der Gasturbogruppe. Eine Bypassleitung 25 mit entsprechenden Regelorganen 26 zweigt von der hochdruckführende Dampfleitung 20 ab und führt direkt in den Kondensator 15. Somit ist die Dampfturbine 11 genügend abgesichert, dass bei einem Lastabwurf, bei Start oder bei einem normalen Abschalten keine Dampfmenge aus einem Hilfsaggregat zu deren Kühlzwecken bereitgestellt werden muss.

### Bezugszeichenliste

- A: Gasturbine
- 1: Verdichtereinheit
- 2: Erste Brennkammer
- 3: Erste Turbine
- 4: Zweite Brennkammer
- 5: Zweite Turbine
- 6: Angesaugte Luft
- 7: Abgase
- 8: Generator
- 9: Kupplung
- 10: Abhitzedampferzeuger
- 10a: Zwischenüberhitzer
- 11: Mitteldruck/Niederdruck-Dampfturbine
- 12: Hochdruck-Dampfturbine
- 13: Getriebe
- 14: Hauptwelle, Rotor
- 15: Kondensator
- 16: Zwischenüberhitzter Dampf
- 17: Entspannter Dampf
- 18: Kondensat
- 19: Zum Speisewasserbehälter und Entgaser oder Abhitzedampferzeuger
- 20: Ueberhitzter Dampf
- 21: Ventile
- 22: Dampf aus der Hochdruck-Dampfturbine
- 23: Vom Economizer
- 24: Förderpumpen
- 25: Bypassleitung
- 26: Regelorgane

## Patentansprüche

1. Verfahren zum Betrieb einer Kombianlage, im wesentlichen bestehend aus einer Gasturbine (A), mindestens einem Generator (8) und einem Dampfkreislauf, wobei dieser Dampfkreislauf im wesentlichen aus einem Abhitzedampferzeuger (10), aus mindestens einer Niederdruckund/oder Mitteldruck-Dampfturbine (11) und einer Hochdruck-Dampfturbine (12) besteht,
- wobei sich zwischen der Hochdruck-Dampfturbine (12) und der Niederdruck- und/oder Mitteldruck-Dampfturbine (11) ein zum Abhitzedampferzeuger (10) gehöriger Zwischenüberhitzer (10a) mit einem bestimmten Volumen befindet,
- wobei die Gasturbine (A), der Generator (8) und die Dampfturbine (11, 12) auf einer Welle (14) angeordnet sind,
- wobei der Generator (8) zwischen der Gasturbine (A) und der Dampfturbine (11, 12) angeordnet ist und sich zwischen dem Generator (8) und der Dampfturbine (11, 12) eine Kupplung (9) befindet,
- wobei im Normalbetrieb die Gasturbine (A) und die Dampfturbine (11, 12) durch die Kupplung (9) miteinander gekoppelt sind,
**dadurch gekennzeichnet, dass**
- bei einem Lastabwurf mindestens ein stromauf der Hochdruck-Dampfturbine (12) wirkendes Ventil (21) geschlossen wird,
- dass die Gasturbine (A) und der Generator (8) von der Niederdruck- und/oder Mitteldruck-Dampfturbine (11) durch die Kupplung (9) entkoppelt werden, so dass Gasturbine (A) und Generator (8) auf Inselbetrieb gehen,
- dass durch die Optimierung des Volumens des Zwischenüberhitzers (10a) die Drehzahl der entkoppelten Dampfturbine (11) nicht grösser ist als die der Gasturbine (A) und des Generators (8),
- dass ein Dampf (16) im Strömungspfad eines zum Abhitzedampferzeuger (10) gehörenden Zwischenüberhitzers (10a) frei durch die Niederdruck- und/oder Mitteldruck-Dampfturbine (11) expandiert, und
- dass durch die Entkopplung von Gas- und Dampfturbine diese Expansion nicht zu einer Drehzahl der Gasturbine (A) und des Generators (8) über deren Schutzdrehzahl führt.

2. Verfahren nach Anspruch 1,
**dadurch gekennzeichnet, dass**
die Hochdruck-Dampfturbine (12), die Niederdruck- und/oder Mitteldruck-Dampfturbine (11) durch eine dampfführende Leitung (25) gebypasst werden.

3. Verfahren nach Anspruch 2,
**dadurch gekennzeichnet, dass**
der Dampf in der Bypassleitung (25) in einen zum Dampfkreislauf gehörenden Kondensator (15) geführt wird.

## Claims

1. Method of operating a combined-cycle plant, essentially comprising a gas turbine (A), at least one generator (8) and a steam circuit, this steam circuit essentially comprising a heat-recovery steam generator (10), at least one low-pressure and/or intermediate-pressure steam turbine (11) and a high-pressure steam turbine (12),
- a reheater (10a) belonging to the heat-recovery steam generator (10) and having a certain volume being located between the high-pressure steam turbine (12) and the low-pressure and/or intermediate-pressure steam turbine (11),
- the gas turbine (A), the generator (8) and the steam turbine (11, 12) being arranged on a shaft (14),
- the generator (8) being located between the gas turbine (A) and the steam turbine (11, 12), and a coupling (9) being located between the generator (8) and the steam turbine (11, 12),
- the gas turbine (A) and the steam turbine (11, 12) being coupled to one another by the coupling (9) during normal operation,
**characterized in that**
- in the event of load shedding, at least one valve (21) acting upstream of the high-pressure steam turbine (12) is closed,
- **in that** the gas turbine (A) and the generator (8) are uncoupled from the low-pressure and/or intermediate-pressure steam turbine (11) by the coupling (9), so that gas turbine (A) and generator (8) go into isolated operation,
- **in that** due to the optimization of the volume of the reheater (10a), the speed of the uncoupled steam turbine (11) is not greater than that of the gas turbine (A) and of the generator (8),
- **in that** steam (16) in the flow path of a reheater (10a) belonging to the heat-recovery steam generator (10) expands freely through the low-pressure and/or intermediate-pressure steam turbine (11), and
- **in that** due to the uncoupling of gas turbine and steam turbine, this expansion does not lead to a speed of the gas turbine (A) and of the generator (8) above their protective speed.

2. Method according to Claim 1, **characterized in that** the high-pressure steam turbine (12) and the low-pressure and/or intermediate-pressure steam turbine (11) are bypassed by a steam-carrying line (25).

3. Method according to Claim 2, **characterized in that** the steam in the bypass line (25) is directed into a condenser (15) belonging to the steam circuit.

## Revendications

1. Procédé pour l'exploitation d'une installation à combinaison de cycles se composant, pour l'essentiel, d'une turbine à gaz (A), d'au moins un alternateur (8) et d'un circuit de vapeur, lequel circuit de vapeur se compose, pour l'essentiel, d'une chaudière de récupération (10), d'au moins une turbine à vapeur basse pression et/ou moyenne pression (11) et d'une turbine à vapeur haute pression (12),
- dans laquelle se trouve, entre la turbine à vapeur haute pression (12) et la turbine à vapeur basse et/ou moyenne pression (11), un surchauffeur intermédiaire (10a) intégré à la chaudière de récupération (10) et disposant d'un volume déterminé ;
- dans laquelle la turbine à gaz (A), l'alternateur (8) et la turbine à vapeur (11, 12) sont disposés sur un arbre (14) ;
- dans laquelle l'alternateur (8) est placé entre la turbine à gaz (A) et la turbine à vapeur (11, 12) et un accouplement (9) se trouve entre l'alternateur (8) et la turbine à vapeur (11, 12) ;
- dans laquelle, en fonctionnement normal, la turbine à gaz (A) et la turbine à vapeur (11, 12) sont accouplées par l'accouplement (9) ;
**caractérisé en ce que**
- lors d'un délestage, au moins une vanne (21) fonctionnant en amont de la turbine à vapeur haute pression (12) est fermée ;
- la turbine à gaz (A) et l'alternateur (8) sont désaccouplés par l'accouplement (9) de la turbine à vapeur basse et/ou moyenne pression (11) de sorte que la turbine à gaz (A) et l'alternateur (8) passent en îlotage ;
- grâce à l'optimalisation du volume du surchauffeur intermédiaire (10a), la vitesse de rotation de la turbine à vapeur (11) désaccouplée n'est pas supérieure à celle de la turbine à gaz (A) et de l'alternateur (8) ;
- une vapeur (16) dans le circuit d'écoulement d'un surchauffeur intermédiaire (10a) intégré à la chaudière de récupération (10) se détend librement dans la turbine à vapeur basse et/ou moyenne pression (11) et
- grâce au désaccouplement de la turbine à gaz et de la turbine à vapeur, cette détente ne conduit pas à une vitesse de rotation de la turbine à gaz (A) et de l'alternateur (8) supérieure à leur vitesse de rotation de sécurité.

2. Procédé selon la revendication 1, **caractérisé en ce que** la turbine à vapeur haute pression (12), la turbine à vapeur basse et/ou moyenne pression (11) peuvent être bypassées par une conduite véhiculant de la vapeur (25).

3. Procédé selon la revendication 2, **caractérisé en ce que** la vapeur dans la conduite de dérivation (25) est amenée dans un condenseur (15) faisant partie du circuit de vapeur.
